# FASCICULE DE BREVET EUROPEEN

(11) **EP 3 647 443 B1**
(45) Date de publication et mention de la délivrance du brevet: **19.05.2021**
(21) Numéro de dépôt: 19204394.1
(22) Date de dépôt: 21.10.2019
(51) Int. Cl.: C22C 24/00, H01M 4/38, H01M 4/505, H01M 4/58, H01M 4/62, H01M 10/0525, H01M 10/0567, H01M 10/0569

(54) **ÉLECTRODE NÉGATIVE SPÉCIFIQUE À BASE DE LITHIUM ET GÉNÉRATEUR ÉLECTROCHIMIQUE AU LITHIUM COMPRENANT UNE TELLE ÉLECTRODE NÉGATIVE**
SPEZIFISCHE NEGATIVE ELEKTRODE AUF LITHIUMBASIS UND ELEKTROCHEMISCHER GENERATOR AUF LITHIUMBASIS, DER EINE SOLCHE NEGATIVE ELEKTRODE UMFASST
SPECIFIC NEGATIVE ELECTRODE MADE OF LITHIUM AND LITHIUM ELECTROCHEMICAL GENERATOR INCLUDING SUCH A NEGATIVE ELECTRODE

(30) Priorité: 29.10.2018 FR 1860010
(43) Date de publication de la demande: 06.05.2020
(73) Titulaire: Commissariat à l'énergie atomique et aux énergies alternatives, 75015 Paris (FR)
(72) Inventeur: CHAVILLON, Benoît, 38054 GRENOBLE CEDEX 09 (FR); AZAIS, Philippe, 38054 GRENOBLE CEDEX 09 (FR); MAYOUSSE, Eric, 38054 GRENOBLE CEDEX 09 (FR)
(74) Mandataire: Brevalex

(56) Documents cités:
- EP-A1- 0 105 799
- US-A- 3 930 888
- US-A- 5 415 954

## Description

### DOMAINE TECHNIQUE

La présente invention a trait à une électrode négative spécifique utilisable dans un dispositif de stockage d'énergie et, plus spécifiquement, un générateur électrochimique au lithium, ce générateur pouvant être un générateur électrochimique primaire (ou pile), lorsqu'il n'est pas rechargeable ou un générateur électrochimique secondaire (ou accumulateur) lorsqu'il est rechargeable.

La présente invention a trait également à un générateur électrochimique comprenant une telle électrode négative, ce générateur électrochimique présentant des propriétés électrochimiques efficaces tout en pouvant présenter une épaisseur d'électrode négative plus fine et plus facilement que pour une électrode comprenant uniquement du lithium métallique conférant ainsi un intérêt tout particulier pour les applications de puissance.

Le domaine de l'invention peut être défini comme celui des dispositifs de stockage d'énergie, en particulier celui des générateurs électrochimiques au lithium.

### ÉTAT DE LA TECHNIQUE ANTÉRIEURE

Les dispositifs de stockage d'énergie sont classiquement des générateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydoréduction, moyennant quoi il y a production d'électrons à l'origine du courant électrique et productions d'ions qui vont circuler d'une électrode à l'autre par le biais d'un électrolyte.

Des générateurs électrochimiques de ce type les plus usités actuellement sont les suivants :
*les générateurs électrochimiques Ni-MH utilisant de l'hydrure métallique et de l'oxyhydroxyde de nickel comme matériaux d'électrode ;
*les générateurs électrochimiques Ni-Cd utilisant du cadmium et de l'oxyhydroxyde de nickel comme matériaux d'électrode ;
*les générateurs électrochimiques Acide-Plomb utilisant du plomb et de l'oxyde de plomb PbO₂ comme matériaux d'électrode ; et
*les générateurs électrochimiques au lithium, telles que ceux utilisant du lithium métallique comme matériau actif de l'électrode négative.

Du fait que le lithium métallique est un élément solide particulièrement léger et présente un potentiel électrochimique le plus faible, permettant ainsi l'accès à une densité d'énergie massique intéressante, les générateurs électrochimiques au lithium sont des candidats particulièrement favorables pour détrôner les autres types d'accumulateurs mentionnés ci-dessus.

Plus spécifiquement, le lithium métallique, qui peut constituer le matériau actif de l'électrode négative, est un matériau utilisable dans la plupart des systèmes tant son énergie massique et volumique est importante. En effet, le lithium présente une densité de 0,534 g/cm³ et une énergie massique de 3861 mAh/g ainsi qu'une densité d'énergie volumique de 2061 mAh/cm³. Ces valeurs restent très élevées par rapport à celles obtenues avec d'autres matériaux d'électrode négative, notamment grâce à la réaction Li → Li⁺ + e⁻, cette réaction impliquant l'échange d'un seul électron par atome de lithium, lequel est très léger et générant ainsi une quantité d'énergie importante pour un faible rapport volume/masse.

L'un des inconvénients lié à l'utilisation du lithium est dû, d'une part, à la formation possible de peroxyde de lithium, lors des processus de décharge et, d'autre part, à la formation éventuelle de dendrites de lithium, lors des processus de charge répétés, qui peuvent court-circuiter l'accumulateur et l'endommager.

Par ailleurs, le lithium peut poser des problèmes sécuritaires, du fait de sa température de fusion de 180°C et peut présenter des difficultés de manipulation pour la fabrication des électrodes négatives.

En effet, le lithium est un métal très réactif notamment lorsqu'il est soumis à un environnement comportant de l'eau, de l'azote et/ou de l'oxygène et présente une capacité d'adhérence sur tous types de métaux ou alliages, tels que l'inox, l'acier voire même sur certains polymères fluorés. Ainsi, il peut s'avérer difficile à manipuler et à mettre en forme, par exemple, par laminage ou extrusion sauf à prendre des précautions particulières, notamment en travaillant sous atmosphère neutre et dénuée d'humidité et/ou en travaillant avec des outils revêtus d'une couche de polymère non réactif, tel que du polyéthylène basse densité.

Enfin, pour une utilisation dans des générateurs électrochimiques, tels que les piles et les accumulateurs, il peut être intéressant d'utiliser pour constituer l'électrode négative des feuillards de lithium très fins, par exemple, d'une épaisseur allant de 10 à 50 µm en vue notamment d'augmenter la densité de puissance. Toutefois, une telle épaisseur est impossible à atteindre avec des laminoirs standards et lorsque de tels feuillards sont disponibles dans le commerce, ils sont très onéreux, même lorsqu'ils sont déjà prélaminés sur des collecteurs de courant (par exemple, un feuillard de cuivre) US3930888A divulgue une pile thermique comprenant une anode constituée par un alliage calcium-lithium; la composition de l'alliage n'est pas divulguée.

Aussi, au vu des inconvénients mentionnés ci-dessus et notamment ceux relatifs à la difficulté de manipulation de lithium pour réaliser des électrodes négatives de faibles épaisseurs, les auteurs de la présente invention se sont fixé pour objectif de proposer un nouveau type d'électrode négative à base de lithium utilisable dans des générateurs électrochimiques au lithium ainsi qu'un nouveau type de générateur électrochimique au lithium comprenant ce type d'électrode négative.

### EXPOSÉ DE L'INVENTION

Ainsi, l'invention a trait à une électrode négative pour générateur électrochimique au lithium caractérisée en ce qu'elle comprend, comme matériau actif, un alliage de lithium et de calcium, dans lequel le calcium est présent dans l'alliage à hauteur de 2 à 34% atomique et qui se présente, avantageusement, sous forme d'une feuille ou plaque présentant une épaisseur allant de 5 à 200 µm

Avant d'entrer plus en détail dans l'exposé de cette invention, nous précisons les définitions suivantes.

Par % atomique, on entend, classiquement, dans ce qui précède et ce qui suit, le rapport correspondant au rapport du (nombre total d'atomes de calcium/nombre total d'atomes de l'alliage)*100.

Par électrode négative, on entend, classiquement, dans ce qui précède et ce qui suit, l'électrode qui fait office d'anode, quand le générateur électrochimique débite du courant (c'est-à-dire lorsqu'il est en processus de décharge) et qui fait office de cathode, lorsque le générateur électrochimique est en processus de charge (dans ce dernier cas, le générateur électrochimique peut être qualifié d'accumulateur, du fait qu'il peut être soumis à un processus de charge et de décharge).

Par matériau actif de l'électrode négative, on entend, classiquement, dans ce qui précède et ce qui suit, le matériau qui est directement impliqué dans la réaction d'oxydation se déroulant au niveau de l'électrode négative, ce matériau actif étant, dans le cadre de cette invention, un alliage de lithium et de calcium.

L'électrode négative comportant un tel matériau actif peut être facilement préparée par lamination et présenter des épaisseurs faibles compatibles pour obtenir une amélioration de la densité de puissance.

Plus spécifiquement, l'électrode négative peut être constituée uniquement du matériau actif, qui est l'alliage de lithium et de calcium tel que mentionné ci-dessus.

D'un point de vue structural, l'électrode négative se présente, avantageusement, sous forme d'une feuille ou plaque présentant une épaisseur allant de 5 à 200 µm, plus spécifiquement de 20 à 100 µm.

Avantageusement, l'alliage de lithium et de calcium constitutif du matériau actif de l'électrode négative est un alliage comportant exclusivement du lithium et du calcium, ce qui signifie que l'alliage comporte du calcium à hauteur de 2 à 34 % atomique et du lithium à hauteur de 66 à 98% atomique.

Plus spécifiquement, il peut être un alliage de lithium comportant du calcium à hauteur de 2 à 15% atomique (ce qui signifie, en d'autres termes, que, lorsque l'alliage de lithium et de calcium comporte exclusivement du lithium et du calcium, le lithium est présent dans l'alliage à hauteur de 85 à 98% atomique).

Le calcium dans l'alliage de lithium et de calcium peut se présenter, en tout ou partie, sous forme de CaLi₂. Dans ce dernier cas, l'alliage de lithium et de calcium peut être considéré comme étant un matériau comprenant une matrice en lithium dont tout ou partie du calcium se trouve sous forme d'inclusions de CaLi₂ dans la matrice en lithium.

Les auteurs de la présente invention ont pu mettre en évidence qu'un tel alliage se lamine facilement et présente de bonnes propriétés mécaniques notamment en termes de résistance à la traction, notamment pour des épaisseurs telles que définies ci-dessus. Qui plus est, une électrode comprenant un tel alliage peut être produite à des coûts de fabrication moindres par rapport à une électrode présentant une même épaisseur d'électrode en lithium métallique.

Avantageusement, l'électrode négative peut être autosupportée, c'est-à-dire qu'elle ne nécessite pas d'être apposée sur un support et, plus spécifiquement, qu'elle ne nécessite pas d'être apposée sur un collecteur de courant. En variante, elle peut être associée à un support, par exemple, du type collecteur de courant, qui peut être un feuillard ou une grille en au moins un élément métallique conducteur de l'électricité, tel que du cuivre, du nickel, du tantale, du titane, du tungstène, lequel feuillard ou grille pouvant présenter une épaisseur allant jusqu'à 500 µm.

Les électrodes négatives sont particulièrement adaptées pour entrer dans la constitution de générateurs électrochimiques au lithium (qu'ils s'agissent de piles ou d'accumulateurs).

Ainsi, l'invention a trait également à un générateur électrochimique comprenant au moins une cellule électrochimique comprenant une électrode positive comprenant, comme matériau actif, un matériau d'insertion du lithium; une électrode négative et un électrolyte conducteur d'ions lithium disposé entre ladite électrode négative et ladite électrode positive, caractérisé en ce que l'électrode négative est telle que définie ci-dessus.

Par électrode positive, on entend, classiquement, dans ce qui précède et ce qui suit, l'électrode qui fait office de cathode, quand le générateur électrochimique débite du courant (c'est-à-dire lorsqu'il est en processus de décharge) et qui fait office d'anode lorsque le générateur électrochimique est en processus de charge (dans ce dernier cas, le générateur électrochimique peut être qualifié d'accumulateur, du fait qu'il peut être soumis à un processus de charge et de décharge).

L'électrode positive du générateur électrochimique de l'invention comprend, comme matériau actif, un matériau d'insertion du lithium et, plus spécifiquement un matériau choisi parmi les oxydes lithiés comprenant au moins un élément métallique de transition, les phosphates lithiés comprenant au moins un élément métallique de transition ou du dioxyde de manganèse.

Comme oxyde lithié comprenant au moins un élément métallique de transition, on peut citer un oxyde de formule suivante :

LiMO₂

dans laquelle M est un élément choisi parmi Ni, Co, Mn, Al, Mg et les mélanges de ceux-ci, et de préférence, encore, avec M étant un élément choisi parmi Ni, Co, Mn, Al et les mélanges de ceux-ci.

D'un point de vue structural, l'oxyde de formule ci-dessus présente une structure lamellaire.

A titre d'exemples de tels oxydes, on peut citer les oxydes lithiés LiCoO₂, LiNiO₂ et les oxydes mixtes Li(Ni,Co,Mn)O₂ (et plus spécifiquement, LiNiₓMn_{y}Co_{z}O₂, dans lequel x+y+z=1, tel que Li(Ni_{1/3}Mn_{1/3}Co_{1/3})O₂ connu également sous la dénomination NMC), Li(Ni,Co,Al)O₂ (et plus spécifiquement, LiNiₓCo_{y}Al_{z}O₂, dans lequel x+y+z=1, tel que Li(Ni_{0,8}CO_{0,15}Al_{0,05})O₂ connu également sous la dénomination NCA) ou Li(Ni,Co,Mn,Al)O₂.

Comme oxyde lithié comprenant au moins un élément métallique de transition, on peut citer également les oxydes lithiés de structure spinelle, tels que LiMn₂O₄.

Comme exemples de composés phosphates lithiés comprenant au moins un élément métallique de transition, on peut citer les composés de formule LiM¹PO₄, où M¹ est choisi parmi Fe, Mn, Co et les mélanges de ceux-ci, tel que LiFePO₄.

Lorsque le matériau actif de l'électrode positive est du dioxyde de manganèse MnO₂, celui-ci peut être d'origine naturelle ou synthétique (par exemple, obtenu par voie chimique ou électrolytique).

Par ailleurs, les générateurs électrochimiques à base de MnO₂ comme matériau actif d'électrode positive, présentent les avantages suivants :
- une tension de fonctionnement presque deux fois élevée que les piles alcalines et une tension de décharge stable ;
- des densités d'énergie massique pouvant s'échelonner de 280 à 360 Wh/kg (en particulier, pour les piles présentant un format cylindrique) ;
- une faible autodécharge (quelques pourcentages par an) ;
- une application dans de nombreux domaines civiles (tel que les multimédias, les jouets).

Le matériau actif de l'électrode positive peut être présent à hauteur de 80 à 95% en masse de la masse totale de l'électrode positive.

En outre, l'électrode positive peut comprendre au moins un additif conducteur électronique et/ou au moins un liant, lequel peut permettre d'assurer la cohésion de l'électrode positive.

L'additif conducteur électronique peut être choisi parmi les noirs de carbone, les noirs d'acétylène, du graphite (en particulier, de la poudre de graphite), les fibres de carbone (en particulier, les fibres de carbone obtenues en phase vapeur connues sous l'abréviation VGCF), des nanotubes de carbone, du titane (en particulier, sous forme de poudre), du nickel (en particulier, sous forme de poudre ou de mousse), de l'aluminium (en particulier, sous forme de poudre), de l'acier inoxydable (en particulier, sous forme de poudre) et des mélanges de ceux-ci.

Le ou les liants peuvent être, en particulier, choisis parmi les liants polymériques, tels que :
*les (co)polymères fluorés éventuellement conducteurs de protons, tels que :
   - les polymères fluorés, tels qu'un polytétrafluoroéthylène (connu sous l'abréviation PTFE), un polyfluorure de vinylidène (connu sous l'abréviation PVDF) ;
   - les copolymères fluorés, tels qu'un poly(fluorure de vinylidène-co-hexafluoropropène) (connu sous l'abréviation PVDF-HFP) ;
   - les polymères fluorés conducteurs de protons, tels que le Nafion® ;
*les polymères élastomères, tels qu'un copolymère styrène-butadiène (connu sous l'abréviation SBR), un copolymère éthylène-propylène-monomère diénique (connu sous l'abréviation EPDM) ;
*les polymères de la famille des alcools polyvinyliques ;
*les polymères cellulosiques, tel qu'une carboxyméthylcellulose sodique ; et
*les mélanges de ceux-ci.

De préférence, le liant utilisé est un liant à base d'un polymère fluoré, tel qu'un polytétrafluoroéthylène, un polyfluorure de vinylidène et les mélanges de ceux-ci, ce type de liant permettant l'obtention d'un bon réseau percolant.

En outre, l'électrode positive peut être également associée à un support destiné, comme son nom l'indique, à supporter les ingrédients susmentionnés, ce support pouvant, en outre, contribuer à assurer une bonne tenue mécanique de l'électrode et une bonne conduction électronique (auquel cas il peut être qualifié de support collecteur de courant).

On peut ainsi qualifier ce type d'électrode supportée.

Ce support peut se présenter sous forme d'une mousse, d'une grille ou encore d'une plaque et peut être en un matériau comprenant un métal ou un alliage métallique ou encore en un matériau carboné.

Il peut s'agir, tout particulièrement, d'un support en titane, d'un support en aluminium, d'un support en nickel, d'un support en tantale ou d'un support en acier inoxydable, ces supports pouvant être sous forme de feuilles ou de grilles.

L'électrolyte destiné à entrer dans la constitution des générateurs électrochimiques de l'invention peut être un électrolyte liquide comprenant au moins un solvant organique et au moins un sel de lithium.

Il peut comprendre :
- comme solvant(s), un ou plusieurs solvants organiques choisis parmi les solvants carbonates, les solvants éthers, les solvants amides, les solvants sulfoxides, les solvants lactones, les solvants lactames, les solvants nitriles, les solvants esters, les solvants sulfites et les mélanges de ceux-ci ;
- au moins un sel de lithium ;
- éventuellement un additif autre qu'un sel de lithium.

A titre d'exemples, le sel de lithium peut être choisi dans le groupe constitué par LiPF₆, LiClO₄, LiBF₄, LiAsF₆, LiSbF₆, LiAlCl₄, LiGaCl₄, LiCF₃SO₃, LiC(SO₂CF₃)₃, le *bis*(trifluorométhylsulfonyl)imidure de lithium (connu sous l'abréviation LiTFSI) LiN[SO₂CF₃]₂, LiSCN, le nitrate de lithium LiNO₃, le *bis*(oxalato)borate de lithium (connu sous l'abréviation LIBOB), le *bis*(fluorosulfonyl)imidure de lithium (connu sous l'abréviation LiFSI), LiPF₃(CF₂CF₃)₃ (connu sous l'abréviation LiFAP), le trifluorométhanesulfonate de lithium LiCF₃SO₃ (connu sous l'abréviation LiTf), le fluorosulfonate de lithium LiSO₃F, LiC₆F₅SO₃, LiO₃SCF₂CF₃, LiO₂CCF₃,LiB(C₆H₅)₄ et les mélanges de ceux-ci.

Le sel de lithium peut être compris, dans l'électrolyte, à hauteur de 0,1 M à 2 M, de préférence, de 0,5 à 1,5 M.

Comme solvant organique appartenant à la famille des solvants carbonates, on peut citer le carbonate d'éthylène (connu sous l'abréviation EC), le carbonate de propylène (connu sous l'abréviation PC), le carbonate de diméthyle (connu sous l'abréviation DMC), le carbonate de diéthyle (connu sous l'abréviation DEC) et les mélanges de ceux-ci.

Comme solvant organique appartenant à la famille des solvants éthers, on peut citer le tétrahydrofurane (connu sous l'abréviation THF), le 1, 2-diméthoxyéthane (connu sous l'abréviation DME), le diglyme, le triglyme, le tétraglyme ou tétraéthylèneglycoldiméthyléther (connu sous l'abréviation TEGDME), le méthoxybenzène.

Comme solvant organique appartenant à la famille des solvants amides, on peut citer le diméthylformamide, le diméthylacétamide.

Comme solvant organique appartenant à la famille des solvants sulfoxides, on peut citer le diméthylsulfoxide (connu sous l'abréviation DMSO).

Comme solvant organique appartenant à la famille des solvants lactones, on peut citer la γ-butyrolactone, la γ-valérolactone, la δ-valérolactone, la ε-caprolactone, la γ-caprolactone.

Comme solvant organique appartenant à la famille des solvants lactames, on peut citer la N-méthyl-2-pyrrolidone (connue sous l'abréviation NMP).

Comme solvant organique appartenant à la famille des solvants nitriles, on peut citer l'acétonitrile.

Comme solvant organique appartenant à la famille des solvants esters, on peut citer l'acétate de méthyle.

Comme solvant organique appartenant à la famille des solvants sulfites, on peut citer le diméthylsulfite.

Le solvant peut être utilisé sous forme d'un seul solvant ou d'un mélange de solvants distincts (pouvant former ainsi un solvant binaire ou un solvant ternaire).

Par exemple, le solvant peut consister en un mélange de plusieurs solvants carbonates, et plus spécifiquement un mélange de trois solvants carbonates, un mélange répondant à cette spécificité étant le mélange carbonate d'éthylène/carbonate de propylène/carbonate de diméthyle.

Comme additif autre qu'un sel de lithium, il peut être ajouté un additif permettant d'améliorer certaines propriétés, par exemple, pour la maîtrise de la passivation, la diminution de l'autodécharge, l'amélioration d'une condition de fonctionnement précise (par exemple, à une température donnée ou à un régime donné), un exemple d'additif étant le carbonate de fluoroéthylène (connu sous l'abréviation FEC).

L'électrolyte liquide susmentionné peut être amené, dans la ou les cellules électrochimiques des générateurs électrochimiques de l'invention, à imprégner un séparateur, lequel est disposé entre l'électrode positive et l'électrode négative de la cellule électrochimique.

Ce séparateur peut être en un matériau poreux apte à accueillir dans sa porosité l'électrolyte liquide.

Ce séparateur peut consister en une membrane en un matériau choisi parmi les fibres de verre (et plus, spécifiquement, un non-tissé de fibres de verre), un matériau polymérique, tel qu'un polytéréphtalate (comme un polytéréphtalate d'éthylène, connu sous l'abréviation PET), une polyoléfine (par exemple, un polyéthylène, un polypropylène), un polyalcool vinylique, un polyamide, un polytétrafluoroéthylène (connu sous l'abréviation PTFE), un polychlorure de vinyle (connu sous l'abréviation PVC), un polyfluorure de vinylidène (connu sous l'abréviation PVDF). Le séparateur peut présenter une épaisseur allant de 5 à 300 µm.

L'électrolyte peut être également un liquide ionique, par exemple, du *bis*(trifluorométhylsulfonyl)imidure de 1-méthyl-1-propylpipéridinium, du *bis*(trifluorométhylsulfonyl)imidure de 1-n-butyl-1-méthylpyrrolidinium et des mélanges de ceux-ci.

L'électrolyte peut consister également en un électrolyte solide, par exemple, une membrane céramique conductrice d'ions lithium, dénommée classiquement LISICON (correspondant à la terminologie anglaise Lithium Super lonic Conductor), cette membrane céramique pouvant être du type perovskite, tel que (La,Li)TiO₃ (connu sous l'abréviation LLTO), du type garnet, tel que Li₅La₃Ta₂O₁₂, Li₆La₃Zr₂O_{11,5}, du type phosphate, tel que Li₁₊ₓAlₓGe₂₋ₓ(PO₄)₃ avec 0<x<0,8 (connu sous l'abréviation LAGP), Li₁₊ₓTi₂₋ₓAlₓ(PO₄)₃ avec 0,25<x<0,3 et Li_{1+x+y}Ti₂₋ₓAlₓSi_{y}(PO₄)_{3-y} avec 0,2<x<0,25 et 0<y<0,05 (connu sous l'abréviation LTAP).

L'électrolyte peut être également un électrolyte polymère comprenant au moins un polymère résultant de la polymérisation d'un ou plusieurs monomères, tels que le fluorure de vinylidène, l'hexafluoropropylène, et comprenant au moins un sel de lithium, tel qu'au moins un de ceux mentionnés ci-dessus au sujet des électrolytes liquides susmentionnés.

Les générateurs électrochimiques de l'invention peuvent être inclus dans une enceinte rigide, par exemple, en acier inoxydable, en acier nickelé, en aluminium ou encore en titane ou dans une enceinte souple.

Les générateurs électrochimiques de l'invention peuvent être adaptés à différents types de formats, tels que le format du type pile bouton, les formats cylindriques, en particulier, les formats AAA, AA, C, D et DD ; les formats bobinés ou spiralés ; le format prismatique.

Un générateur électrochimique spécifique à l'invention est un générateur électrochimique comprenant au moins une cellule électrochimique comprenant :
- une électrode négative constituée d'une feuille en alliage de lithium et de calcium comprenant une teneur en calcium de 2% atomique ou 15% atomique ;
- une électrode positive comprenant un mélange comprenant du LiFePO₄ (par exemple, à hauteur de 90,5 % massique), du noir de carbone (par exemple, à hauteur de 4,5 % massique) et un liant polymérique, par exemple, du polyfluorure de vinylidène (par exemple, à hauteur de 4,5% massique), ce mélange étant déposé sur un substrat collecteur de courant, par exemple, un feuillard en aluminium ;
- un séparateur poreux disposé entre ladite électrode négative et ladite électrode positive, ledit séparateur étant imprégné d'un électrolyte comprenant un sel de lithium LiPF₆ dans un mélange de solvants carbonates (par exemple, un mélange ternaire de carbonate d'éthylène/carbonate de propylène/carbonate de diméthyle).

Ce générateur électrochimique est un générateur électrochimique secondaire et peut donc être qualifié d'accumulateur.

Un autre générateur électrochimique conforme à l'invention est un générateur électrochimique comprenant au moins une cellule électrochimique comprenant :
- une électrode négative constituée d'une feuille en alliage de lithium et de calcium comprenant une teneur en calcium de 2% atomique ou 15% atomique ;
- une électrode positive comprenant un mélange comprenant du MnO₂ (par exemple, à hauteur de 80 % massique), du noir d'acétylène (par exemple, à hauteur de 10 % massique) et un liant polymérique, par exemple, du polyfluorure de vinylidène (par exemple, à hauteur de 10% massique), ce mélange étant déposé sur un substrat collecteur de courant, par exemple, un feuillard en aluminium ;
- un séparateur poreux disposé entre ladite électrode négative et ladite électrode positive, ledit séparateur étant imprégné d'un électrolyte comprenant un sel de lithium LiPF₆ dans un mélange de solvants carbonates (par exemple, un mélange ternaire de carbonate d'éthylène/carbonate de propylène/carbonate de diméthyle).

Les générateurs électrochimiques de l'invention peuvent être réalisés par des techniques classiques à la portée de l'homme du métier, par exemple, par empilement des différents éléments constitutifs du générateur électrochimique (à savoir, électrode négative, électrode positive et séparateur), cet empilement pouvant être maintenu dans un boîtier. L'alliage constitutif de l'électrode négative peut être réalisé par fusion de lithium et de calcium, par exemple, sur une plaque chauffante, à une température pouvant aller de 140 à 500°C, sous une atmosphère neutre (par exemple, une atmosphère d'argon) suivie, après mélange, d'une trempe du mélange fondu pour former rapidement l'alliage. L'alliage ainsi obtenu peut être mis sous forme d'une plaque ou feuille par laminage en vue d'entrer dans la constitution de l'électrode négative.

L'invention va maintenant être décrite, en référence à l'exemple suivant, donné à titre indicatif et non limitatif.

### BRÈVE DESCRIPTION DES FIGURES

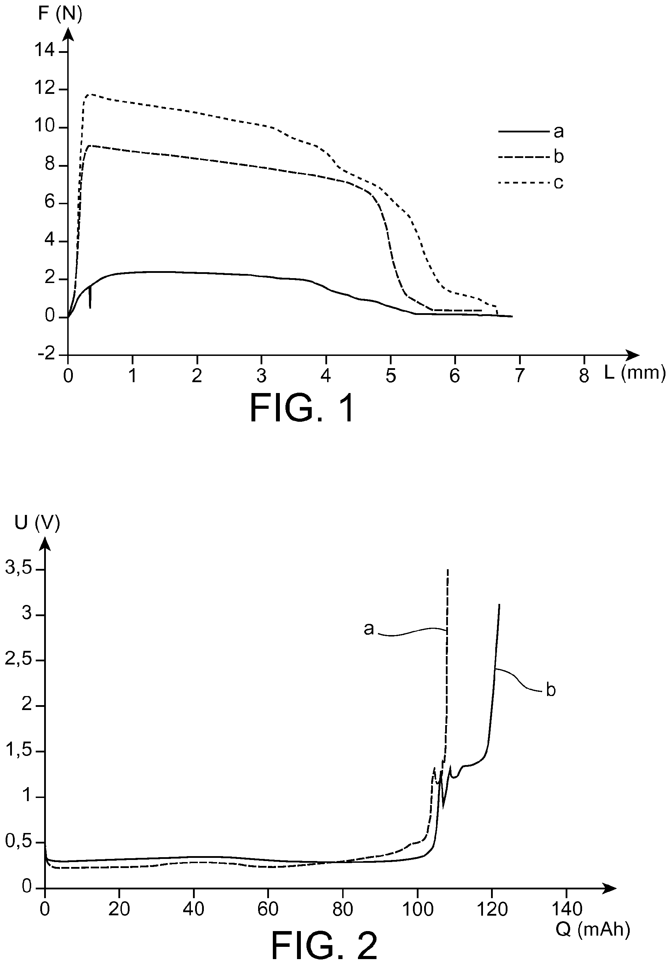

La figure 1 est un graphique illustrant l'évolution de la force de traction F (en N) en fonction de l'allongement L (en mm) pour des matériaux illustrés à l'exemple 1 ci-dessous, la courbe a) étant relative à celle obtenue avec le matériau constitué de lithium métallique uniquement, la courbe b) étant relative à celle obtenue avec le matériau comprenant 2% atomique de calcium et la courbe c) étant relative à celle obtenue avec le matériau comprenant 4% atomique de calcium.
La figure 2 est un graphique illustrant l'évolution de la tension U (en V) en fonction de la charge Q (en mAh) avec la courbe a) pour le générateur électrochimique comportant le matériau comportant 2% atomique de calcium et la courbe b) pour le générateur électrochimique comportant le matériau comportant 8% atomique de calcium de l'exemple 1 ci-dessous.

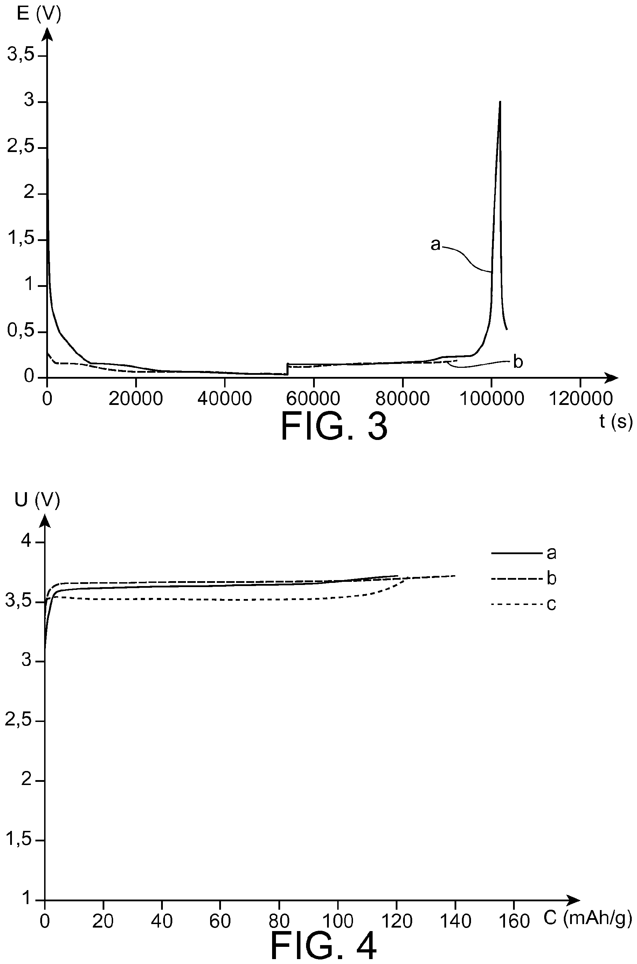

La figure 3 est un graphique illustrant l'évolution du potentiel E (en V) en fonction du temps de test t (en s) avec la courbe a) pour le générateur électrochimique comportant le matériau comportant 8% atomique de calcium et la courbe b) pour le générateur électrochimique comportant le matériau comportant du lithium métallique uniquement de l'exemple 1 ci-dessous.
La figure 4 est un graphique illustrant l'évolution de la tension de charge U (en V) sous 0,9 mA (C/10) à 20°C en fonction de la capacité massique C (en mAh/g de LiFePO₄) avec la courbe a) pour le premier générateur électrochimique, la courbe b) pour le deuxième générateur électrochimique et la courbe c) pour le troisième générateur électrochimique de l'exemple 2 ci-dessous.

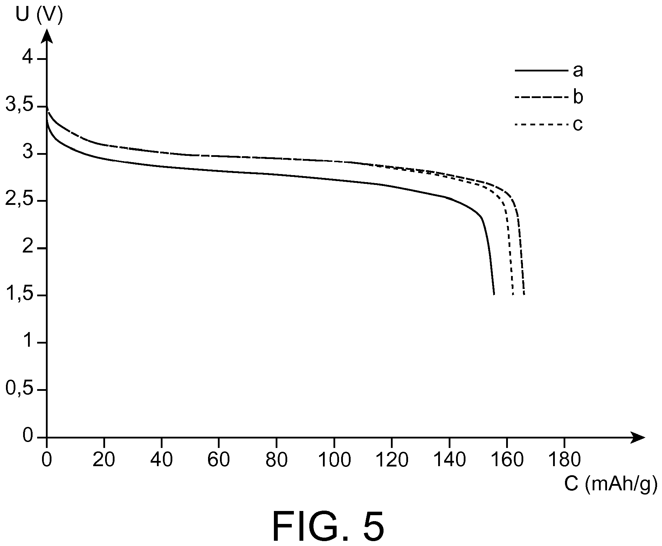

La figure 5 est un graphique illustrant l'évolution de la tension de charge U (en V) sous 100 µA à 20°C en fonction de la capacité massique C (en mAh/g) avec la courbe a) pour le premier générateur électrochimique, la courbe b) pour le deuxième générateur électrochimique et la courbe c) pour le troisième générateur électrochimique de l'exemple 3 ci-dessous.

### EXPOSÉ DÉTAILLÉ DE MODES DE REALISATIONS PARTICULIERS

### EXEMPLE 1

L'exemple ci-dessous illustre la synthèse de plusieurs matériaux constitués d'un alliage de lithium et de calcium et la détermination de leurs propriétés mécaniques.

Plus précisément, il est préparé un alliage de lithium et de calcium comportant 2% atomique de calcium, un alliage de lithium et de calcium comportant 4% atomique de calcium, un alliage de lithium et de calcium comportant 8% atomique de calcium et un alliage de lithium et de calcium comportant 14,76% atomique de calcium.

Pour ce faire, il est fondu sur une plaque chauffante sous atmosphère d'argon du lithium métallique et du calcium métallique dans les proportions requises et, après mélange, une trempe du milieu fondu obtenu est réalisée pour former rapidement un matériau solide.

Les matériaux solides obtenus sont analysés par diffraction des rayons X, les diagrammes résultants illustrant pour chacun des matériaux la présence de lithium métallique et la présence de calcium sous forme de CaLi₂.

Les différents matériaux solides ont été également pu être laminés sous forme de feuilles à des épaisseurs allant de 20 à 30 µm, de telles épaisseurs n'étant pas atteignables aussi facilement avec des matériaux solides à base de lithium métallique uniquement compte tenu qu'ils deviennent collants et se déchirent facilement pour des épaisseurs inférieures à 100 µm.

Des essais de traction à 1 mm/minute ont également été effectués avec des éprouvettes de 100 µm d'épaisseurs obtenues avec le matériau comprenant 2% atomique de calcium et le matériau comprenant 4% atomique de calcium et avec, pour référence, un matériau constitué de lithium métallique uniquement.

Les résultats sont reportés sur la figure 1 illustrant l'évolution de la force de traction F (en N) en fonction de l'allongement L (en mm), la courbe a) étant relative à celle obtenue avec le matériau constitué de lithium métallique uniquement, la courbe b) étant relative à celle obtenue avec le matériau comprenant 2% atomique de calcium et la courbe c) étant relative à celle obtenue avec le matériau comprenant 4% atomique de calcium.

Il ressort qu'un début de rupture intervient dès l'application d'une force de 2 N pour le matériau constitué uniquement de lithium métallique tandis qu'il faut une force de 9N pour le matériau comprenant 2% atomique de calcium et une force de 12 N pour le matériau comprenant 4% atomique pour obtenir ce même début de rupture. Ainsi, ces résultats démontrent que le calcium confère un effet bénéfique aux propriétés mécaniques au matériau dans lequel il est inclus et sont en cohérence avec ce qui est observé avec les essais de laminage.

Le fonctionnement du matériau comprenant 2% atomique de calcium et 8% atomique de calcium, comme électrode négative, a été testé également dans un système de générateur électrochimique où il fait face à une électrode de lithium métallique.

Les deux matériaux comportent la même quantité de lithium et présentent respectivement une épaisseur de 100 µm d'épaisseur pour le matériau comprenant 2% atomique de calcium et une épaisseur de 160 µm d'épaisseur pour le matériau comprenant 8% atomique de calcium.

Les générateurs électrochimiques résultants sont soumis à des tests, à 20°C, destinés à montrer l'évolution de la tension U (en V) en fonction de la charge Q (en mAh), les résultats étant reportés sur la figure 2 avec la courbe a) pour le générateur électrochimique comportant le matériau comportant 2% atomique de calcium et la courbe b) pour le générateur électrochimique comportant le matériau comportant 8% atomique de calcium.

Il ressort de ces courbes que chacun de ces matériaux passe complètement en décharge sur l'anode de lithium.

Pour finir, le matériau comportant 8% de calcium a été testé dans un générateur électrochimique face à du graphite en le cyclant à 200 µA pour 3 mAh en comparaison avec un générateur électrochimique comprenant du lithium métallique uniquement face à du graphite, les courbes étant reportées sur la figure 3 illustrant l'évolution du potentiel E (en V) en fonction du temps de test t (en s) (courbe a) pour le générateur électrochimique comportant le matériau comportant 8% atomique de calcium et courbe b) pour le générateur électrochimique comportant le matériau comportant du lithium métallique uniquement).

Il ressort de ces courbes que l'alliage de lithium et de calcium peut être utilisé dans un générateur électrochimique comme matériau actif réversible.

### EXEMPLE 2

L'exemple suivant illustre un premier générateur électrochimique conforme à l'invention sous forme d'une pile-bouton comportant :
- une électrode négative constituée d'un disque de 14 mm de diamètre et composée d'un alliage de lithium et de calcium à hauteur de 2% atomique de calcium, ladite électrode présentant une épaisseur de 100 µm et une surface de 1,54 cm² ;
- une électrode positive constituée d'un disque de 16 mm de diamètre, ladite électrode étant composée d'une couche comprenant du LiFePO₄ (90,5% massique), du polyfluorure de vinylidène (5% massique) et du noir de carbone Super P® (4,5% massique), cette couche étant déposée sur un feuillard en aluminium présentant une épaisseur de 20 µm et le grammage en LiFePO₄ étant d'environ 30 mg/cm², soit une capacité de pile d'environ 4,5 mAh/cm²;
- entre l'électrode négative et l'électrode positive, un séparateur du type Celgard 2400® sous forme d'un disque de 16 mm de diamètre et d'une surface de 2 cm², ledit séparateur étant imprégné d'un électrolyte constitué d'un mélange de solvants carbonates EC : PC: DMC en proportions massiques respectives 1/1/3 et un sel de lithium LiPF₆ 1M.

Un autre générateur électrochimique conforme à l'invention (dit deuxième générateur électrochimique) a été réalisé, ce générateur électrochimique répondant aux mêmes spécificités que celles illustrées ci-dessus, si ce n'est que l'alliage de l'électrode négative comporte 15% massique de calcium.

A titre comparatif, un autre générateur électrochimique non conforme à l'invention (dit troisième générateur électrochimique) a été réalisé dans cet exemple, ce générateur électrochimique répondant aux mêmes spécificités que celles des générateurs électrochimiques conformes à l'invention, si ce n'est que l'électrode négative est en lithium pur.

Pour ces trois générateurs électrochimiques, il est déterminé l'évolution de la tension de charge U (en V) sous 0,9 mA (C/10) à 20°C en fonction de la capacité massique C (en mAh/g de LiFePO₄), les résultats étant reportés sur la figure 4 jointe en annexe (courbe a) pour le premier générateur électrochimique, courbe b) pour le deuxième générateur électrochimique et courbe c) pour le troisième générateur électrochimique).

De ces courbes, il ressort que, quel que le soit le matériau utilisé pour l'électrode négative, les surtensions sont équivalentes et caractéristiques de la technologie lithium-LiFePO₄. La capacité massique de LiFePO₄ est presque entièrement restituée. L'utilisation d'un alliage de lithium et de calcium pour l'électrode négative en décharge face à une électrode positive comprenant du LiFePO₄ est donc possible sans altérer les performances par rapport à du lithium métallique non allié.

En outre, la présence de calcium dans l'alliage de lithium constitutif de l'électrode négative contribue à rendre l'alliage plus facile à laminer que du lithium pur, ce qui permet d'envisager l'utilisation d'un tel alliage pour constituer des électrodes négatives plus fines et ainsi des surfaces développées plus importantes, ce qui peut s'avérer un atout majeur dans les générateurs électrochimiques destinés à des applications de puissance.

### EXEMPLE 3

L'exemple suivant illustre un premier générateur électrochimique conforme à l'invention sous forme d'une pile-bouton comportant :
- une électrode négative constituée d'un disque de 14 mm de diamètre et composée d'un alliage de lithium et de calcium à hauteur de 2% atomique de calcium, ladite électrode présentant une épaisseur de 100 µm et une surface de 1,54 cm² ;
- une électrode positive constituée d'un disque de 16 mm de diamètre, ladite électrode étant composée d'une couche comprenant du MnO₂ (80% massique), du polyfluorure de vinylidène (10% massique) et du noir d'acétylène (10% massique), cette couche étant déposée sur un feuillard en aluminium présentant une épaisseur de 20 µm et le grammage en dioxyde de manganèse étant compris entre 5,6 et 6,2 mg/cm², soit une capacité de pile comprise entre 3,45 et 3,81 mAh ;
- entre l'électrode négative et l'électrode positive, un séparateur du type Celgard 2400 ® sous forme d'un disque de 16 mm de diamètre et d'une surface de 2 cm², ledit séparateur étant imprégné d'un électrolyte constitué d'un mélange de solvants carbonates EC : PC : DMC en proportions massiques respectives 1/1/3 et un sel de lithium LiPF₆ 1M.

Un autre générateur électrochimique conforme à l'invention (dit deuxième générateur électrochimique) a été réalisé, ce générateur électrochimique répondant aux mêmes spécificités que celles illustrées ci-dessus, si ce n'est que l'alliage de l'électrode négative comporte 15% massique de calcium.

A titre comparatif, un autre générateur électrochimique non conforme à l'invention (dit troisième générateur électrochimique) a été réalisé dans cet exemple, ce générateur électrochimique répondant aux mêmes spécificités que celles conformes à l'invention, si ce n'est que l'électrode négative est en lithium pur.

Pour ces trois générateurs électrochimiques, il est déterminé l'évolution de la tension de décharge U (en V) sous 100 µA à 20°C en fonction de la capacité massique C (en mAh/g de MnO₂), les résultats étant reportés sur la figure 5 jointe en annexe (courbe a) pour le premier générateur électrochimique, courbe b) pour le deuxième générateur électrochimique et courbe c) pour le troisième générateur électrochimique).

De ces courbes, il ressort que, quel que le soit le matériau utilisé pour l'électrode négative, les surtensions sont équivalentes et caractéristiques de la technologie lithium-MnO₂ (entre 2,5 et 3 V). L'utilisation d'un alliage de lithium et de calcium pour l'électrode négative en décharge face à une électrode positive comprenant du MnO₂ est donc possible sans altérer les performances par rapport à du lithium métallique non allié.

En outre, la présence de calcium dans l'alliage de lithium constitutif de l'électrode négative contribue à rendre l'alliage plus facile à laminer que du lithium pur, ce qui permet d'envisager l'utilisation d'un tel alliage pour constituer des électrodes négatives plus fines et ainsi des surfaces développées plus importantes, ce qui peut s'avérer un atout majeur dans les générateurs électrochimiques destinés à des applications de puissance.

## Revendications

1. Électrode négative pour générateur électrochimique au lithium, **caractérisée en ce qu'**elle comprend, comme matériau actif, un alliage de lithium et de calcium, dans lequel le calcium est présent dans l'alliage à hauteur de 2 à 34% atomique et qui se présente sous forme d'une feuille ou plaque présentant une épaisseur allant de 5 à 200 µm.

2. Électrode négative selon la revendication 1, qui est constituée uniquement du matériau actif, qui est l'alliage de lithium et de calcium.

3. Électrode selon l'une quelconque des revendications précédentes, dans laquelle l'alliage de lithium et de calcium comporte exclusivement du lithium et du calcium.

4. Électrode selon l'une quelconque des revendications précédentes, dans laquelle l'alliage de lithium et de calcium est un alliage de lithium comportant du calcium à hauteur de 2 à 15% atomique.

5. Électrode selon l'une quelconque des revendications précédentes, dans laquelle le calcium dans l'alliage de lithium et de calcium se présente, en tout ou partie, sous forme de CaLi₂.

6. Électrode selon l'une quelconque des revendications précédentes, qui est autosupportée.

7. Générateur électrochimique comprenant au moins une cellule électrochimique comprenant une électrode positive comprenant, comme matériau actif, un matériau d'insertion du lithium; une électrode négative et un électrolyte conducteur d'ions lithium disposé entre ladite électrode négative et ladite électrode positive, **caractérisé en ce que** l'électrode négative est telle que définie selon l'une quelconque des revendications 1 à 6.

8. Générateur électrochimique selon la revendication 7, dans lequel le matériau d'insertion du lithium est choisi parmi les oxydes lithiés comprenant au moins un élément métallique de transition, les phosphates lithiés comprenant au moins un élément métallique de transition, du dioxyde de manganèse et les mélanges de ceux-ci.

9. Générateur électrochimique selon la revendication 8, dans lequel l'oxyde lithié comprenant au moins un élément métallique de transition est un oxyde de formule suivante :
LiMO₂
dans laquelle M est un élément choisi parmi Ni, Co, Mn, Al, Mg et les mélanges de ceux-ci.

10. Générateur électrochimique selon la revendication 8, dans lequel l'oxyde lithié comprenant au moins un élément métallique de transition est un oxyde lithié de structure spinelle, tel que LiMn₂O₄.

11. Générateur électrochimique selon la revendication 8, dans lequel le phosphate lithié comprenant au moins un élément métallique de transition est un composé de formule LiM¹PO₄, où M¹ est choisi parmi Fe, Mn, Co et les mélanges de ceux-ci.

12. Générateur électrochimique selon la revendication 8, dans lequel le matériau d'insertion du lithium est MnO₂.

13. Générateur électrochimique selon l'une quelconque des revendications 7 à 12, dans lequel l'électrode positive comprend au moins un additif conducteur électronique et/ou au moins un liant.

14. Générateur électrochimique selon la revendication 13, dans lequel le liant est un liant polymérique.

15. Générateur électrochimique selon l'une quelconque des revendications 7 à 14, dans lequel l'électrolyte conducteur d'ions lithium est un électrolyte liquide comprenant au moins un solvant organique et au moins un sel de lithium.

## Patentansprüche

1. Negative Elektrode für einen elektrochemischen Lithium-Generator, **dadurch gekennzeichnet, dass** sie als aktives Material eine Legierung aus Lithium und Kalzium umfasst, wobei das Kalzium in der Legierung in einer Menge von 2 bis 34 Atom-% vorhanden ist und diese in Form einer Folie oder Platte mit einer Dicke von 5 bis 200 µm vorliegt.

2. Negative Elektrode nach Anspruch 1, welche ausschließlich aus dem aktiven Material besteht, das die Legierung aus Lithium und Calcium ist.

3. Elektrode nach einem der vorhergehenden Ansprüche, wobei die Lithium-Calcium-Legierung ausschließlich Lithium und Calcium umfasst.

4. Elektrode nach einem der vorhergehenden Ansprüche, wobei die Lithium-Calcium-Legierung eine Lithiumlegierung ist, die Calcium in einer Menge von 2 bis 15 Atom-% enthält.

5. Elektrode nach einem der vorhergehenden Ansprüche, wobei das Calcium in der Lithium-Calcium-Legierung ganz oder teilweise als CaLi₂ vorliegt.

6. Elektrode nach einem der vorhergehenden Ansprüche, welche selbsttragend ist.

7. Elektrochemischer Generator, umfassend wenigstens eine elektrochemische Zelle, umfassend eine positive Elektrode, die als aktives Material ein Lithiumeinlagematerial umfasst, eine negative Elektrode und einen zwischen der negativen Elektrode und der positiven Elektrode angeordneten Lithiumionen leitenden Elektrolyten, **dadurch gekennzeichnet, dass** die negative Elektrode gemäß einem der Ansprüche 1 bis 6 definiert ist.

8. Elektrochemischer Generator nach Anspruch 7, wobei das Lithiumeinlagematerial gewählt ist aus Lithiumoxiden, die wenigstens ein Übergangsmetallelement umfassen, Lithiumphosphaten, die wenigstens ein Übergangsmetallelement umfassen, Mangandioxid und Mischungen davon.

9. Elektrochemischer Generator nach Anspruch 8, wobei das Lithiumoxid, umfassend wenigstens ein Übergangsmetallelement ein Oxid der folgenden Formel ist:
LiMO₂
wobei M ein Element ist, gewählt aus Ni, Co, Mn, Al, Mg und Mischungen davon.

10. Elektrochemischer Generator nach Anspruch 8, wobei das Lithiumoxid, welches wenigstens ein Übergangsmetallelement umfasst, ein Lithiumoxid mit einer Spinellstruktur, wie LiMn₂O₄, ist.

11. Elektrochemischer Generator nach Anspruch 8, wobei das Lithiumphosphat, welches wenigstens ein Übergangsmetallelement umfasst, eine Verbindung der Formel LiM¹P0₄ ist, wobei M¹ gewählt ist aus Fe, Mn, Co und Mischungen davon.

12. Elektrochemischer Generator nach Anspruch 8, wobei das Lithiumeinlagematerial MnO₂ ist.

13. Elektrochemischer Generator nach einem der Ansprüche 7 bis 12, wobei die positive Elektrode wenigstens ein elektronisch leitendes Additiv und/oder wenigstens ein Bindemittel umfasst.

14. Elektrochemischer Generator nach Anspruch 13, wobei das Bindemittel ein polymeres Bindemittel ist.

15. Elektrochemischer Generator nach einem der Ansprüche 7 bis 14, wobei der Lithiumionen leitende Elektrolyt ein flüssiger Elektrolyt ist, der wenigstens ein organisches Lösungsmittel und wenigstens ein Lithiumsalz umfasst.

## Claims

1. Negative electrode for a lithium electrochemical generator, **characterised in that** it comprises, as active material, a lithium and calcium alloy, wherein the calcium is present in the alloy to the extent of 2% to 34% atomic and which is in the form of a sheet or plate having a thickness ranging from 5 to 200 µm.

2. Negative electrode according to claim 1, which consists solely of active material, which is the lithium and calcium alloy.

3. Electrode according to any of the preceding claims, wherein the lithium and calcium alloy comprises solely lithium and calcium.

4. Electrode according to any of the preceding claims, wherein the lithium and calcium alloy is a lithium alloy comprising calcium to the extent of 2% to 15% atomic.

5. Electrode according to any of the preceding claims, wherein the calcium in the lithium and calcium alloy is wholly or partly in the form of CaLi₂.

6. Electrode according to any of the preceding claims, which is self-supporting.

7. Electrochemical generator comprising at least one electrochemical cell comprising a positive electrode comprising, as active material, a lithium-insertion material, a negative electrode and an electrolyte conducting lithium ions disposed between said negative electrode and said positive electrode, **characterised in that** the negative electrode is as defined according to any of claims 1 to 6.

8. Electrochemical generator according to claim 7, wherein the lithium-insertion material is chosen from lithiated oxide comprising at least one transition metal element, the lithiated phosphates comprising at least one transition metal element, manganese dioxide and mixtures thereof.

9. Electrochemical generator according to claim 8, wherein the lithiated oxide comprising at least one transition metal element is an oxide of the following formula:
LiMO₂
where M is an element chosen from Ni, Co, Mn, Al, Mg and mixtures thereof.

10. Electrochemical generator according to claim 8, wherein the lithiated oxide comprising at least one transition metal element is a lithiated oxide with a spinel structure, such as LiMn₂O₄.

11. Electrochemical generator according to claim 8, wherein the lithiated phosphate comprising at least one transition metal element is a compound of formula LiM¹PO₄, where M¹ is chosen from Fe, Mn, Co and mixtures thereof.

12. Electrochemical generator according to claim 8, wherein the lithium-insertion material is MnO₂.

13. Electrochemical generator according to any of claims 7 to 12, wherein the positive electrode comprises at least one electron-conducting additive and/or at least one binder.

14. Electrochemical generator according to claim 13, wherein the binder is a polymeric binder.

15. Electrochemical generator according to any of claims 7 to 14, wherein the electrolyte conducting lithium ions is a liquid electrolyte comprising at least one organic solvent and at least one lithium salt.
